Europäisches Patentamt

(19) European Patent Office

Office européen des brevets

(11) EP 0 762 377 A2

(12) EUROPEAN PATENT APPLICATION

(43) Date of publication:
12.03.1997 Bulletin 1997/11

(51) Int. Cl.⁶: G09G 3/36

(21) Application number: 96113100.0

(22) Date of filing: 14.08.1996

(84) Designated Contracting States:
DE FR GB

(30) Priority: 18.08.1995 JP 233385/95

(71) Applicant: SONY CORPORATION
Tokyo (JP)

(72) Inventors:
• Matsui, Eriko,
c/o Sony Corp.
Shinagawa-ku, Tokyo (JP)

• Endo, Hiroaki,
c/o Sony Corp.
Shinagawa-ku, Tokyo (JP)
• Yasuda, Akio,
c/o Sony Corp.
Shinagawa-ku, Tokyo (JP)

(74) Representative: TER MEER - MÜLLER -
STEINMEISTER & PARTNER
Mauerkircherstrasse 45
81679 München (DE)

(54) Method of driving a liquid crystal device

(57) A method of driving a liquid crystal device that has a pair of substrates with liquid crystal provided therebetween, and that has regions of different threshold voltages distributed therein utilizes one selected from driving waveforms or a combination of them, such as applying reset pulses for returning molecules or the layer structure of the liquid crystal to the initial state, and setting relaxation duration, the introduction of electric field orientation-processed pulses, black writing, the introduction of superimposed part-included pulses for compensating the transformation of an effective voltage waveform caused by data voltage, and the introduction of high-frequency AC pulses or low-frequency AC pulses for enhancing the stability of memory effects and relaxing the polarization of liquid crystal molecules and the orientation film.

FIG. 1

EP 0 762 377 A2

Printed by Rank Xerox (UK) Business Services
2.13.16/3.4

**Description**

BACKGROUND OF THE INVENTION

Field of the Invention

This invention relates to a method of driving a liquid crystal device having a pair of substrates with liquid crystal provided therebetween, in particular, to a method of driving a liquid crystal device having a pair of substrates oppositely positioned, on each of which a transparent electrode and an orientation film are provided in the order given, and between which liquid crystal is encapsulated.

Description of the Related Art

Research and development for applying ferroelectric liquid crystal to display devices has been actively proceeding. Ferroelectric liquid crystal displays are superior, generally having the following features (1) to (3):

(1) High speed response (1,000 times higher than that of a conventional nematic liquid crystal displays);
(2) Angle-dependent visibility is reduced; and
(3) A displayed image remains because of memory effects.

Conventionally, as such a display technology of ferroelectric liquid crystal, there is a surface-stabilized ferroelectric liquid crystal device proposed by Clark, et al., as disclosed in United States Patent No. 4,367,924. According to this proposed liquid crystal device, the orientation of liquid crystal molecules is determined by using a molecular orientation control force in the interface of the display panel, with the cell gap of the panel reduced to 2 $\mu$m or less, so that an energy condition is created, which is stable in only two states. Further, intense research and development has been conducted, regarding the response of the micro-second order, memory effects of images, and so forth.

In such a ferroelectric liquid crystal display device having bi-stable modes, there are characteristics such as, canceling flicker, which is a problem occurring in, e.g., cathode-ray tubes, by providing the memory effects, and being driven with 1000 or more scanning lines even in a simple X-Y matrix drive (abolishing driving in thin film transistors). In connection with the problem that the angle of view is limited in nematic liquid crystal devices which are widely used at present, the ferroelectric device has uniform molecular orientation, and its panel has a half gap as the nematic liquid crystal panel, therefore it has a wide angle of view.

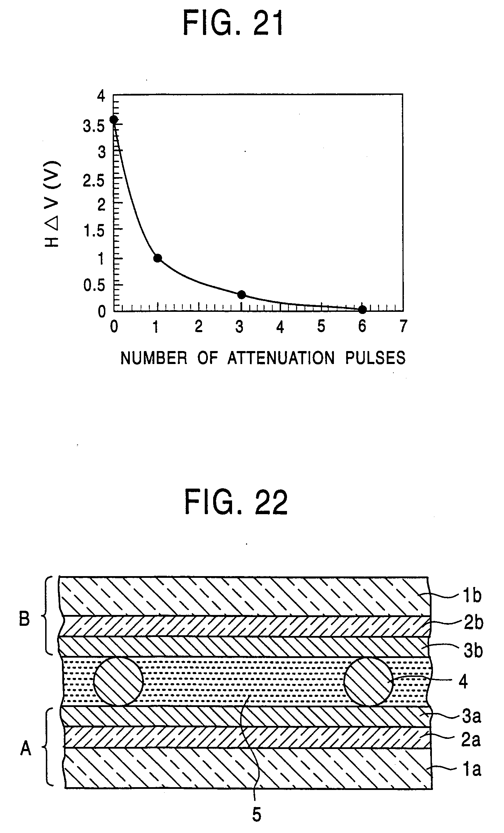

Such a ferroelectric liquid crystal display (ferroelectric liquid crystal device) has a structure as schematically illustrated in, e.g., Fig. 22. In other words, the display has a transparent substrate 1a made of, for example, glass; a transparent electrode layer 2a made from indium tin oxide (conductive oxide in which indium is doped with tin) provided thereon; and a laminate A in which as a liquid crystal orientation film, for example, an oblique SiO-deposited film 3a is successively formed on the electrode layer 2a, and similarly, a transparent substrate 1b made of, for example, glass; a transparent electrode layer 2b provided thereon; and a laminate B in which as a liquid crystal orientation film, for example, an oblique SiO-deposited film 3b is successively formed on the electrode layer 2b, with the deposition layers 3a and 3b oppositely positioned, and ferroelectric liquid crystal 5 encapsulated in a liquid crystal gap formed by inserting spacers 4 for making a predetermined cell gap therebetween.

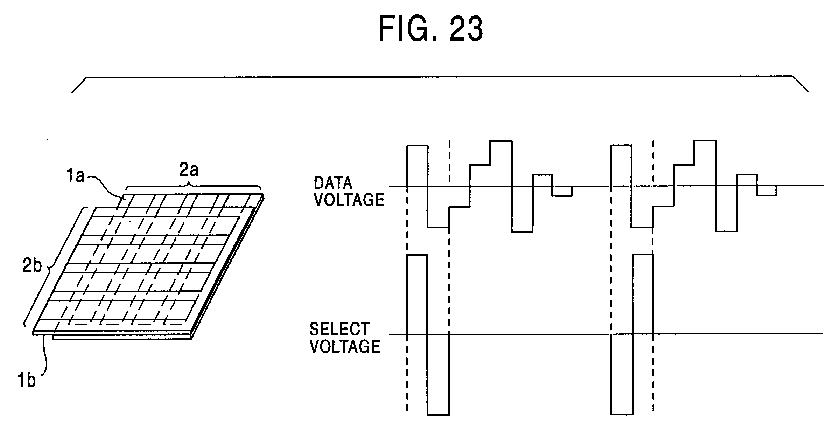

As a method of driving the ferroelectric liquid crystal display, the X-Y matrix drive method is used, which is shown in Fig. 23. In the NTSC method, 1 H (one horizontal scanning period or one line selection period) is 63.5 $\mu$s, while in the X-Y matrix drive method, bipolar application of voltage causes each select pulse to have a duration of 63.5/2 $\mu$s. From the row side of electrodes (the electrode 2b), select pulses are sent, while from the column side (the electrode 2a), data pulses are sent.

However, although the ferroelectric liquid crystal display has the above advantages, it is known that the display has, as a problem, a difficulty in gradation display. That is, because the conventional ferroelectric liquid crystal display is stable in only two states, it has been regarded as inappropriate for a gradation display as used in video displays.

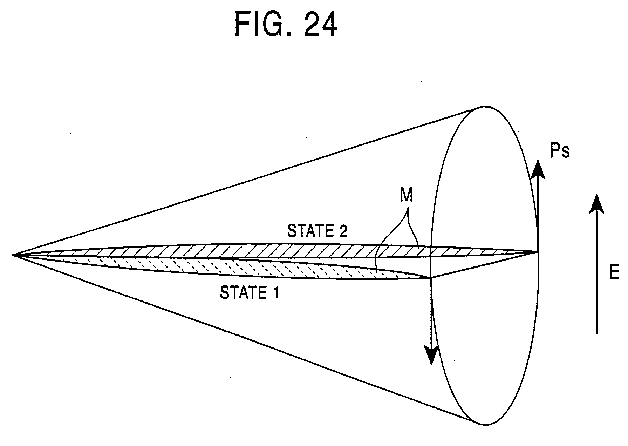

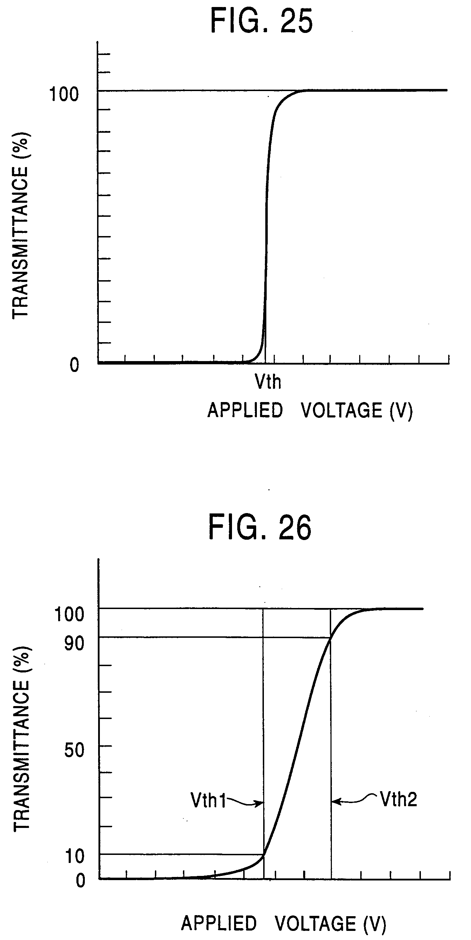

In other words, the ferroelectric liquid crystal device (e.g., an interface-stabilized type ferroelectric liquid crystal device) has liquid crystal molecules M, the orientation direction of which with respect to an externally applied electric field E is switched between mode 1 and mode 2, as shown in Fig. 24. This change in the molecular orientation is observed as a change in transmittance when the liquid crystal device is provided between polarizing plates positioned perpendicular to each other. As shown in Fig. 25, with respect to the applied electric field, the transmittance rapidly changes from 0 to 100% at threshold voltage $V_{th}$. This voltage width at which the transmittance changes is, in general, not more than 1 V. The $V_{th}$ also changes depending upon a minute move in the cell gap. Consequently, in accordance with a conventional liquid crystal device, it is difficult to make a stable voltage width in the transmittance versus applied voltage curve, and as a result, it is difficult or impossible to perform gradation display by controlling the voltage.

Accordingly, there are proposed countermeasures such as a method of controlling gradation by adjusting the area of pixels with sub-pixels provided (area gradation method); and a method of controlling gradation by utilizing the high speed switching characteristics of ferroelectric liquid crystal, thereby increasing switching in one field (time integration method). These methods, however, are not capable of performing gradient expression within one pixel, and therefore they still have the problem of insufficient gradation display.

In the area gradation method, as the number of performing gradations increases, the number of required sub-pixels increases, and as a result, it is obvious that the method is inferior on a cost effectiveness basis in consideration of device production and a method of driving. On the other hand, in the time integration method, it is required to use liquid crystal which is responsive at an extremely high speed (the nano-second order response), therefore, not only the method but also a combination of the method and the Area Gradation method hardly have practicability.

To solve such problems, as methods for performing analog gradation display, there has been proposed a method by which the distance between electrodes oppositely positioned is changed in one pixel, or the thickness of a dielectric layer provided between electrodes oppositely positioned is changed to locally form electric field strength gradient, and a method by which materials for electrodes oppositely positioned are changed to form voltage gradient.

However, producing practical-level liquid crystal devices with analog gradation display characteristics causes its process to become complicated, which causes great difficulties in controlling production conditions, and further causes an increase in production costs.

On the other hand, as shown in Japanese Patent Laid-Open Publication No. 3-276126, there is proposed a ferroelectric liquid crystal display capable of controlling gradation display by dispersing alumina particles having a diameter of 0.3-2 $\mu$m on an orientation film in order to control the inversion of ferroelectric liquid crystal by applying a voltage to the particles dispersed.

However, in this related art, the size of the particles are too large, while the amount of dispersion is not specified, so that intended gradation display is extremely difficult to achieve for practical purposes.

This is because in actuality, it is extremely difficult to finely control the inversion of liquid crystal in one pixel by simply dispersing particles each having a diameter of 0.3-2 $\mu$m in a 2 $\mu$m cell gap. In addition, since a ferroelectric liquid crystal display uses the birefringence mode of the liquid crystal, controlling the cell gap is extremely difficult, therefore irregularity appears in display colors. Such a condition is similar to the case of a current super twisted nematic display device in which a change in its cell gap is required to be not more than 50 nm.

To solve the problems in the related art, the present inventors have already proposed, in Japanese Patent Application No. 5-262951 (which is referred hereinafter as the "previous invention"), a liquid crystal display device, especially, a ferroelectric liquid crystal display device, that realizes analog gradation display while maintaining high contrast.

In other words, it has been discovered that in a liquid crystal display device with electrode layers provided on the facing surfaces of a pair of substrates, analog gradation display is achieved by making distribution in the effective electric field strength applied to the liquid crystal in one pixel, in order to broaden a threshold voltage width for switching between the bi-stable conditions of the liquid crystal in one pixel. The liquid crystal device of the previous invention is based on this fact, and has a pair of substrates with liquid crystal provided therebetween, in which regions of different threshold voltages for switching the liquid crystal are finely distributed.

The liquid crystal device of the previous invention can be formed such that a pair of substrates are oppositely positioned over a predetermined distance, on each of which a transparent electrode and an orientation film are provided in the order given, and between the substrates ferroelectric liquid crystal is encapsulated. The above description in which regions of different threshold voltages are finely distributed means that when the transmittance caused by inverted domains is 25%, there are 300 domains, and preferably 600 domains, each having a diameter of 1 $\mu$m, in a field of view having an area of 1 mm$^2$, and further means that within the domains a threshold voltage width is not less than 1 V in the range of transmittance of 10-99%. Such inverted domains are, e.g., black domains in white domains, or the reverse thereof.

As shown in Fig. 26, in detail, in accordance with the liquid crystal device of the previous invention, there is shown in transmittance a relatively gradual change, different from transmittance that rapidly changes as shown in Fig. 25. This is because, in particular, within one pixel, the emergence of the fine regions of different threshold voltages ($V_{th}$) causes the transmittance of microdomains to change in accordance with the magnitude of the applied voltage. Within one pixel, memory effects are created when liquid crystal molecules are bi-stable. Domains of the $\mu$m-order, having different threshold voltages, form one pixel. As a result, continuous gradation display is realized.

According to Fig. 26, among threshold voltages causing transmittance to change, $V_{th1}$ is defined as the threshold voltage at a transmittance of 10%, while $V_{th2}$ is defined as the threshold voltage at a transmittance of 90%, the change between these threshold voltages ($\Delta V_{th} = V_{th2} - V_{th1}$) is not less than 1 V.

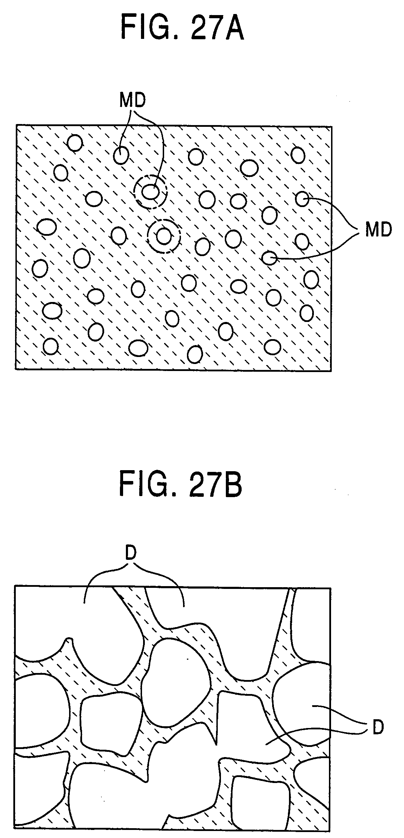

As shown in Fig. 27A, when transmittance is 25%, there emerges domains MD, each having a diameter of not less than 1 $\mu$m at the rate of not less than 300 domains per mm$^2$. Fine light-transmitted portions by these microdomains realize a display image (transmittance) of half tones. Such a structure formed by these microdomains appear to resemble a so-called starry sky, therefore it is hereinafter referred as a "starlight texture".

In accordance with this starlight texture, as shown in Fig. 27A, it is possible to enlarge the light-transmitted portions MD, as shown by dashed lines (transmittance increases), or reduce them (transmittance decreases) by controlling the applied voltage, or otherwise to increase or decrease the number of the microdomains with each size maintained. That is, it is possible to optionally change transmittance by applying a voltage. On the contrary, it is extremely difficult for the device shown in Fig. 25 to perform gradation display because, as shown in Fig. 27B, an extremely narrow threshold voltage width simply causes light-transmitted portions D caused by the applied voltage to increase or to disappear.

In accordance with the previous invention, as means to form the above-described microdomains, ultrafine particles may be dispersed in the liquid crystal 5 in the liquid crystal cell shown in Fig. 22.

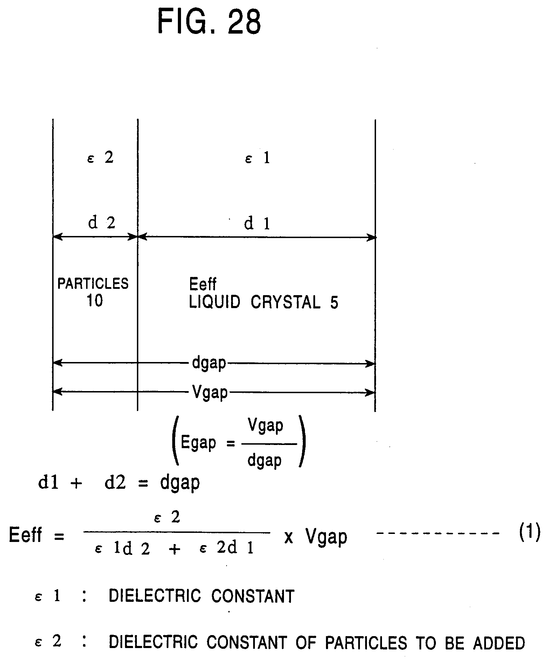

By referring to Fig. 28, the principle of threshold voltage change caused by ultrafine particles will be described. An electric field, $E_{eff}$, applied to the ultrafine particles is expressed by the following equation:

$$E_{eff} = ( \varepsilon_2 / ( \varepsilon_1 d_2 + \varepsilon_2 d_1 ) ) \times V_{gap}$$

where $d_2$ represents the diameter of an ultrafine particle 10; $\varepsilon_2$, the dielectric constant of the ultrafine particles; $d_1$, the thickness of the liquid crystal 5 excluding the ultrafine particles 10; and $\varepsilon_1$, the dielectric constant of the liquid crystal.

Consequently, adding ultrafine particles whose dielectric constant is less than that of liquid crystal ($\varepsilon_2 < \varepsilon_1$) means to add ultrafine particles ($d_2$) which are smaller than the total thickness of the liquid crystal layer, $d_{gap}$ ($= d_1 + d_2$). The following relation is therefore derived:

$$E_{eff} < E_{gap}$$

As a result, the liquid crystal is affected by a lower electric field, $E_{eff}$, compared with the case when the ultrafine particles are not added ($E_{gap}$). On the contrary, adding ultrafine particles whose dielectric constant is greater than that of the liquid crystal ($\varepsilon_2 > \varepsilon_1$) derives the following relation:

$$E_{eff} > E_{gap}.$$

As a result, the liquid crystal is affected by a greater electric field, $E_{eff}$, compared with the case when the ultrafine particles are not added ($E_{gap}$).

The above discussion can be summarized as follows:

$$\text{when } \varepsilon_2 > \varepsilon_1, E_{eff} < ( V_{gap} / d_1 + d_2 ) = V_{gap} / d_{gap} = E_{gap};$$

$$\text{when } \varepsilon_2 = \varepsilon_1, E_{eff} = E_{gap}; \text{ and}$$

$$\text{when } \varepsilon_2 < \varepsilon_1, E_{eff} > E_{gap}.$$

In any of these cases, adding ultrafine particles causes a change in an effective electric field $E_{eff}$ affecting liquid crystal itself, thus, there are created different effective electric fields affecting a region where the ultrafine particles are present and the other region where they are absent. Thus, when the same field $E_{gap}$ affects the liquid crystal, there are generated, between those regions, a region with inverted domains and another region without them, so that the starlight texture as shown in Fig. 27A emerges.

Based on this fact, the starlight texture disclosed by the previous invention is suitable to realize continuous gradation. Further, a variety of transmittances (that is, a plurality of gradation levels) can be provided by controlling the applied voltages (e.g., the magnitude, pulse duration, and so forth), with ultrafine particles added (in other words, by applying a plurality of voltages). On the contrary, simply adding ultrafine particles as in a conventional method results in only a structure as shown in Fig. 27B. In particular, it is obvious that adding ultrafine particles each having a diameter of 0.3-2 $\mu$m, in a minute gap which is approximately 2 $\mu$m, cannot achieve the intended display performance. Except for the minute gap, the particle portion causes irregularity in display colors, which will be detailed in comparative examples as described below. The previous invention provides target performance without such phenomena occurring.

In the liquid crystal device of the previous invention, as particles to be added to the liquid crystal, it is possible to use particles capable of producing a distribution in an effective electric field applied to the liquid crystal 5 provided between the transparent substrates 2a and 2b facing each other, e.g., a mixture of particles made of plural materials having different dielectric constants. In such a manner, the existence of particles with different dielectric constants enables the formation of dielectric constant distribution within each pixel. As a result, as described above, even in the case when an external electric field is uniformly applied between the transparent electrode layers 2a and 2b in the pixel, distribution is achieved in an effective electric field strength applied to the liquid crystal within the pixel, while the distribution width of threshold voltage for switching between the bi-stable modes of the liquid crystal is broadened, whereby analog gradation display is realized within one pixel.

On the other hand, when particles having the same dielectric constant are used as the particles to be added, they may have different sizes. In this manner, the existence of the particles that have dielectric constants which are not different but are of different sizes achieves distribution in the thickness of the liquid crystal. As a result, even in the case when an external electric field is uniformly applied between the transparent substrates 2a and 2b in one pixel, distribution is achieved in an effective electric field strength applied to the liquid crystal within the pixel, so that analog gradation display is realized in one pixel. The distribution of the sizes of the particles, distribution that is to some extent broad is preferred, because it enables superior analog gradation display.

In the liquid crystal device in accordance with the previous invention, it is preferred that particles to be added to the liquid crystal have surfaces of not less than pH 2.0. This is because a value of less than pH 2.0 means too much acidity, and the liquid crystal readily deteriorates due to protons.

Also, the amount of the particles is not particularly limited, and may be appropriately determined in consideration of desired analog gradation and so forth. Preferably, the particles are preferred to be added into the liquid crystal at the rate of not more than 50% and not less than 0.001% by weight. Excessive addition of the particles causes the liquid crystal to condense to form the starlight texture, and it may be difficult for liquid crystal to be injected.

Usable particles may be made of carbon black and/or titanium oxide. The carbon black is preferred to be pyrolytic carbon black produced by the furnace method while the titanium oxide is expected to be amorphous titanium oxide. The pyrolytic carbon black produced by the furnace method has relatively broad particle size distribution, while the amorphous titanium oxide has good surface characteristics and superior durability.

The usable particles are preferred to each have, in the primary particle state in which the particles do not condense, a size of not more than one-half of the liquid crystal cell gap, which is not more than 0.4 µm, and particularly not more than 0.1 µm. On the other hand, by using the size distribution of the particles, it is possible to control gradation display characteristics. However, the standard deviation of the size distribution is preferred to be not less than 9.0 nm because the value enables the transmittance to gradually change. The particles are preferred to have a specific gravity of from 0.1 to 10 times as much as the liquid crystal in order to prevent the particles from precipitating when they are dispersed in the liquid crystal, while the particles are preferred to have surfaces processed with, for example, a silane coupling agent so that they are sufficiently dispersed.

In accordance with the previous invention, the particles need to be present between the electrodes facing each other, however the location of the particles is not particularly limited, and may be in the liquid crystal, in the orientation film of the liquid crystal, or on the orientation film of liquid crystal. Except for dispersing the particles between the electrodes facing each other, the structure of the liquid crystal device may be similar to that of the liquid crystal device shown in Fig. 22 (in particular, a ferroelectric liquid crystal device). For example, it is possible to use transparent glass plates as transparent substrates, indium tin oxide and so forth as electrode layers, and rubbing-processed polyimide layers or oblique SiO-deposited films as liquid crystal orientation films. Also, the driving method may be the same as that shown in Fig. 23. Further, to the display gray scale by using the above-described microdomain texture, since the scales are obtained by changing the voltage of data pulses, the pulses are always applied in the whole one frame.

However, having reviewed the previous invention, the present inventors have found that it still has the following problems although it has the above-described advantages.

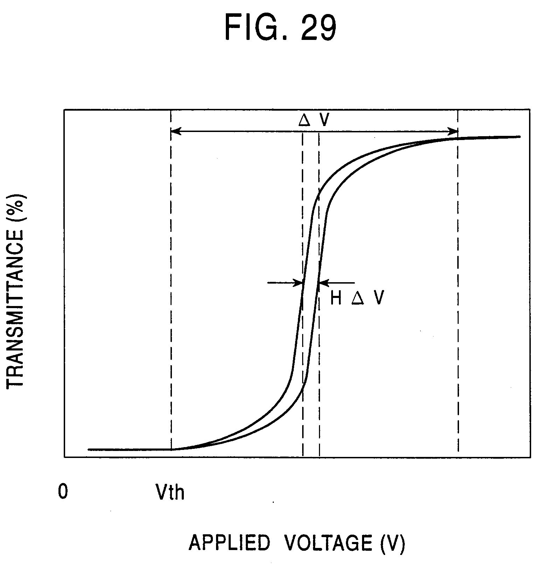

In Fig. 29 there are shown threshold characteristics regarding the liquid crystal device of the previous invention. In actuality, hysteresis is generated in transmittance change with respect to the applied voltage. In order to control values such as the distribution width of thresholds that shows gradation ($\Delta V$), the hysteresis width ($H\Delta V$) that determines the number of gradation, and the minimum threshold voltage (V), there is nothing but great improvements of the kinds of particles to be added, the concentration of the particles, and the composition of liquid crystal, which may change the characteristics of the materials used. In this context, the mentioned "hysteresis" is the hysteresis in the relation between the applied electric field strength and transmittance, and the hysteresis width ($H\Delta V$) is expected to be as small as possible.

Except for gradation, there are many characteristics required for the liquid crystal device, for example, an operating temperature range, a preservation temperature range, contrast, a response speed, and so forth. Accordingly, the above-described control of the characteristics of materials in connection with gradation expression may affect other characteristics, and has its own limit.

## SUMMARY OF THE INVENTION

An object of the present invention is to provide a method of driving a liquid crystal device, which allows analog gradation display to be controlled, without depending upon the particles being added to the liquid crystal material, while the features of the previous invention are achieved.

The present inventors paid attention to, for example, driving waveforms used to drive a liquid crystal device, and attempted to determine whether or not it is possible to control the distribution width of thresholds that show gradation

($\Delta V$), the hysteresis width (H$\Delta V$) determining the number of gradations, and the minimum threshold voltage ($V_{th}$).

As a result, the present invention has been achieved, without any change of materials and with more complete analog gradation realized by controlling factors such as selecting a driving waveform, or combining some driving waveforms. Such controlling the factors are as follows:

(1) applying reset pulses and setting relaxation durations for returning liquid crystal molecules or a liquid crystal layer structure to the initial state;
(2) introducing electric field orientation-processed pulses, black level writing, or superimposed part-included pulses $f_H$ for compensating the negative effects of data voltage; or
(3) introducing high-frequency AC stabilized pulses or low-frequency attenuation pulses for enhancing memory effects and relaxing the polarization of liquid crystal molecules and the orientation film.

To these ends, according to the present invention, there is provided a method of driving a liquid crystal device in which liquid crystal is provided between a pair of substrates and regions of different threshold voltages for switching the liquid crystal are distributed, wherein reset pulses are applied to the liquid crystal device, the reset pulses having durations required for returning the molecules of the liquid crystal to the initial state (which means that the whole liquid crystal molecules are simultaneously re-orientated in one direction, for example, they turn to be black as the transmittance is null).

The reset pulses, each having sufficient duration for returning the liquid crystal molecules to the initial state, are applied in each field.

Preferably, the pulse duration is not less than 1 H (namely, not less than the double of select pulse duration), and further to be 1 H × (1.5 to 2.0).

Further, in one pixel analog gradation display is performed by including particles in the liquid crystal of this device so that fine domains of different threshold voltages for enabling analog gradation are distributed.

Pulses for reducing a change in electric field strength caused by data pulses are superimposed on the reset pulses.

According to the present invention, there is provided a method of driving a liquid crystal device in which liquid crystal is provided between a pair of substrates and regions of different threshold voltages for switching the liquid crystal are distributed, wherein a relaxation duration required for returning the molecules of the liquid crystal to the initial state is provided between a reset pulse and a select pulse.

The duration, encouraging the molecules of the liquid crystal to return to the initial state, is provided in each field.

It is preferred that the relaxation duration provided in the reset pulses is a positive multiple of (1/2) H, in particular, one to ten times as long as (1/2) H. Since the value (1/2) H corresponds to one select pulse, multiplying the duration by a positive number means that a relaxation duration can be generated by using a circuit configuration similar to that for generating select pulses.

Further, in one pixel analog gradation display is performed by including particles in the liquid crystal of this device so that fine domains of different threshold voltages for enabling analog gradation are distributed.

According to the present invention, there is provided a method of driving a liquid crystal device in which liquid crystal is provided between a pair of substrates and regions of different threshold voltages for switching the liquid crystal are distributed, wherein a duration for writing the black level is provided between a reset pulse and a select pulse.

The duration for writing the black level is provided in each field.

It is preferred that the duration for writing the black level is not less than 1 H and not more than 1 ms. Excessive black writing duration is not proper because it causes the white level to deteriorate.

Further, in one pixel analog gradation display is performed by including particles in the liquid crystal of this device so that fine domains of different threshold voltages for enabling analog gradation are distributed.

According to the present invention, there is provided a method of driving a liquid crystal device in which liquid crystal is provided between a pair of substrates and regions of different threshold voltages for switching the liquid crystal are distributed, wherein electric field orientation-processed pulses for returning the molecules of the liquid crystal to the initial state are applied before select pulses are applied.

The electric field orientation-processed pulses for returning the molecules of the liquid crystal to the initial state are applied in each field.

It is preferred that the product of the applied voltage and pulse duration of the electric field orientation-processed pulse is not less than 15 V · ms.

Further, in one pixel analog gradation display is performed by including particles in the liquid crystal of this device so that fine domains of different threshold voltages for enabling analog gradation are distributed.

According to the present invention, there is provided a method of driving a liquid crystal device in which liquid crystal is provided between a pair of substrates and regions of different threshold voltages for switching the liquid crystal are distributed, wherein AC pulses are applied, the frequency of which is not less than a frequency which causes molecules of the liquid crystal to have the negative anisotropy of dielectric constant.

The AC pulses may be applied, out of the periods in which reset pulses and select pulses are given in the respective fields.

It is preferred to apply the high-frequency AC pulses of not less than 30 kHz and having a voltage of not more than 30 V, setting its pulse duration to not more than (1/2) H, in consideration of both the switching characteristics of the liquid crystal molecules and the maintenance of memory effects.

Further, in one pixel analog gradation display is performed by including particles in the liquid crystal of this device so that fine domains of different threshold voltages for enabling analog gradation are distributed.

According to the present invention, there is provided a method of driving a liquid crystal device in which liquid crystal is provided between a pair of substrates and regions of different threshold voltages for switching the liquid crystal are distributed, wherein attenuation pulses having voltages of not more than threshold voltage are applied.

The attenuation pulses may applied, out of the periods in which reset pulses and select pulses are given in the respective fields.

It is preferred that the attenuation pulses are applied in order to neutralize ions present in the interface between orientation films provided on the substrates and the liquid crystal.

It is preferred that the product of the voltage and the duration of the maximum pulse included in the attenuation pulses will not be more than 1/2 of Data Voltage × (1/2) H. This is because switching caused by the select pulse can be prevented.

Further, in one pixel analog gradation display is performed by including particles in the liquid crystal of this device so that fine domains of different threshold voltages for enabling analog gradation are distributed.

Further, in accordance with the methods of the present inventions, the structure, the materials, and so forth of the liquid crystal device may be similar to those in the previous invention, such as the particles present between a pair of the substrates facing each other, so that a description thereof will be omitted hereinafter. On the other hand, it is possible to use transparent glass plates as the substrates, indium tin oxide or the like as the electrode layers, and rubbing-processed polyimide layers or oblique SiO-deposited films as the liquid crystal orientation films. As the liquid crystal, ferroelectric liquid crystal may be used.

BRIEF DESCRIPTION OF THE DRAWINGS

Fig. 1 is a waveform chart showing a driving waveform used to drive a liquid crystal device in accordance with example 1 of the present invention.

Fig. 2 is a table showing the applied voltage and the transmittance at the black level caused by reset pulse durations.

Fig. 3 is waveform chart showing a driving waveform used to drive a liquid crystal device in accordance with comparative example 1 of the present invention.

Fig. 4 is a graph showing the relation between the applied voltage and transmittance in the liquid crystal device in accordance with the comparative example 1.

Fig. 5 is a waveform chart showing a driving waveform used to drive a liquid crystal device in accordance with example 2 of the present invention.

Fig. 6 is a graph showing the relation between the applied voltage and transmittance in the liquid crystal device in accordance with the example 2.

Fig. 7 is a graph showing the relation between reset relaxation durations and the transmittance at the black level in the liquid crystal device in accordance with the example 2.

Fig. 8 is waveform chart showing a driving waveform used to drive a liquid crystal device in accordance with example 3 of the present invention.

Fig. 9 is a graph showing the relation between duration for writing black and hysteresis H$\Delta$V in the liquid crystal device in accordance with example 3.

Fig. 10 is a graph showing the relation between duration for writing black and a change rate of the white level in the liquid crystal device in accordance with example 3.

Fig. 11 is a waveform chart showing a driving waveform used to drive a liquid crystal device in accordance of the comparative example 2.

Fig. 12 is a graph showing the relation between the applied voltage and transmittance in the liquid crystal device in accordance with the comparative example 2.

Fig. 13 is waveform chart showing a driving waveform used to drive a liquid crystal device in accordance with example 4 of the present invention.

Fig. 14 is a table showing the applied voltages and the hysteresis widths in the liquid crystal device in accordance with the example 4.

Fig. 15 is a waveform chart showing a driving waveform used to drive a liquid crystal device in accordance with example 5 of the present invention.

Fig. 16 is a table showing the voltage of superimposed part-included pulses and the transmittance at the black level in the liquid crystal device in accordance with the example 5.

Fig. 17A is a waveform chart showing a driving waveform used to drive a liquid crystal device in accordance with example 6 of the present invention.

Fig. 17B is an enlarged chart showing part of the driving waveform shown in Fig. 17A.

Fig. 18 is a graph showing the relation between AC pulse voltages and electro-optical characteristics in the liquid crystal device in accordance with the example 6.

Fig. 19 is a graph showing the relation between AC pulse durations and electro-optical characteristics in the liquid crystal device in accordance with the example 6.

Fig. 20 is a waveform chart showing a driving waveform used to drive a liquid crystal device in accordance with Example 7 of the present invention.

Fig. 21 is a graph showing the relation between the number of attenuation pulses applied to the liquid crystal device in accordance with example 7 and hysteresis.

Fig. 22 is a schematic section view of a conventional ferroelectric liquid crystal device.

Fig. 23 has a schematic perspective view and a driving waveform chart showing the X-Y simple matrix drive method employed in the conventional ferroelectric liquid crystal device.

Fig. 24 is a model chart showing ferroelectric liquid crystal.

Fig. 25 is a transmittance-versus-applied voltage characteristic chart showing the threshold voltages of a conventional liquid crystal device.

Fig. 26 is a transmittance-versus-applied voltage characteristic chart showing the threshold voltages of a liquid crystal device as the previous invention.

Fig. 27A is a schematic explanatory chart showing the change of transmittance in switching the liquid crystal device as the previous invention.

Fig. 27B is a schematic explanatory chart showing the change of transmittance in switching the liquid crystal device having no gradation as the previous invention.

Fig. 28 is schematic explanatory chart showing an effective electric field in the liquid crystal of the liquid crystal device as the previous invention.

Fig. 29 is a transmittance-applied voltage characteristic chart showing a hysteresis width in the liquid crystal device as the previous invention.

DESCRIPTION OF THE PREFERRED EMBODIMENTS

The present invention will be further described below, by referring to examples and comparative examples thereof.

EXAMPLE 1 (CONTROL OF RESET PULSE DURATION)

In order to produce a liquid crystal cell (display), as shown in Fig. 22, on a glass substrate on which a transparent indium tin oxide film (sheet resistivity 100 $\Omega/cm^2$) 40 nm thick is provided by sputtering techniques, an oblique SiO-deposited film as a liquid crystal orientation film 50 nm thick was formed with vacuum deposition techniques by heating (resistance heating) a tantalum boat (made by Nihon Backsmetal Co., Ltd.) containing SiO powder (purity 99.99%, made by Furuuchi Kagaku Co., Ltd.). During production, vacuum deposition was performed so that a normal on the substrate and a vertical line on the deposition source formed an angle of 85°.

A liquid crystal cell was fabricated by using the following: two substrates processed by the above manner; spacers each having a diameter of 1.6 $\mu$m (Shinshikyu made by Catalysts & Chemicals Industries Co., Ltd.); and an ultraviolet hardening adhesive (Photolec made by Sekisuifine Chemical Co., Ltd.) so that the directions of oblique SiO-deposited films were positioned in anti-parallel alignment to each other. Ferroelectric liquid crystal (YS-C100 made by Chisso Corporation), in which titanium oxide (IT-OA made by Idemitsu Kosan Co., Ltd.) is uniformly dispersed at 1% by weight, was injected into the cell gap of this liquid crystal cell so that a liquid crystal device was obtained.

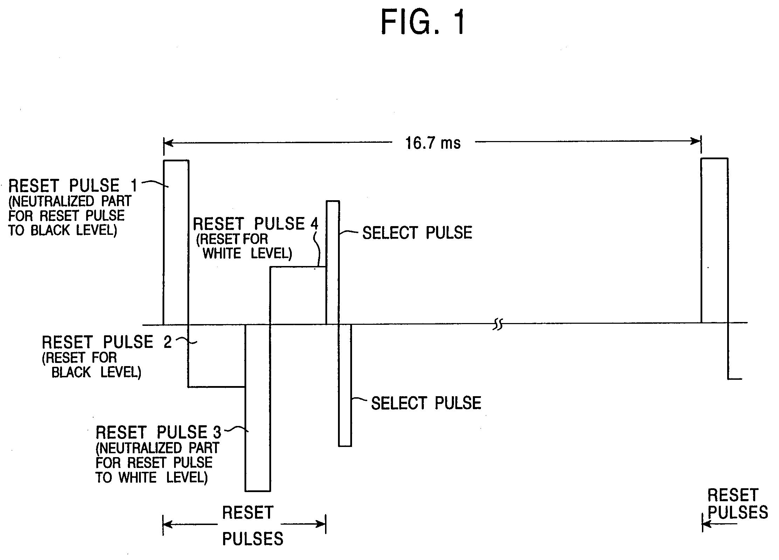

In connection with this liquid crystal device, the relationship between the applied voltage and transmittance was examined. In other words, by using a driving waveform as described below and shown in Fig. 1, the liquid crystal device was driven under crossed Nicols conditions, and light transmission intensity at the black level was monitored with a photo-multiplier.

A reset pulse, intended for uniformly returning once to the initial state the director of the liquid crystal caused to change by the previously written voltage, was applied each time just before writing. A reset pulse 2 is changed depending upon transmission intensity at the black level, while a reset pulse 1 is for its electrical neutralization, therefore intensity in these areas is the same. On the other hand, a reset pulse 4 is determined in the same manner such that an extinction position is shifted by an angle of the memory cone, while a reset pulse 3 is intended for electrical neutralization at the white level. Normally, the reset pulses 2 and 4 are equal to each other, and the reset pulses 1 and 3 are equal to each other. The reset pulses 2 and 4 may not be applied.

Further, since the reset pulses 2 and 4 have different durations, the reset pulses 1 or 3 for electrical neutralization are applied. However, the sum of the durations of the reset pulses 1 to 4 is set to a sufficient magnitude (that is, preferably, not less than 1 H, and not less than two times the duration of select pulse), based on the present invention. The value of this reset pulse should be not less than 5 V, normally, e.g., 40 V, in consideration of the withstand voltage of an integrated circuit and uniform resetting.

It is important that the waveforms of the reset pulses 1 to 4 are changed such that field strength is changed depending upon not only voltage but also mainly on the pulse duration, because of resetting with respect to each stable position in consideration of bi-stability of the ferroelectric liquid crystal molecules. When "Field Strength × Time (pulse duration)" are sufficiently supplied, if only the voltage to be applied is paid attention to, the maximum value is determined due to the withstand voltage of the integrated circuit. However, a pulse duration is used in a wider range than the limited range of field strength, although it has a limitation due to the human senses (e.g. flicker resulting from black-white change caused by the switching of liquid crystal).

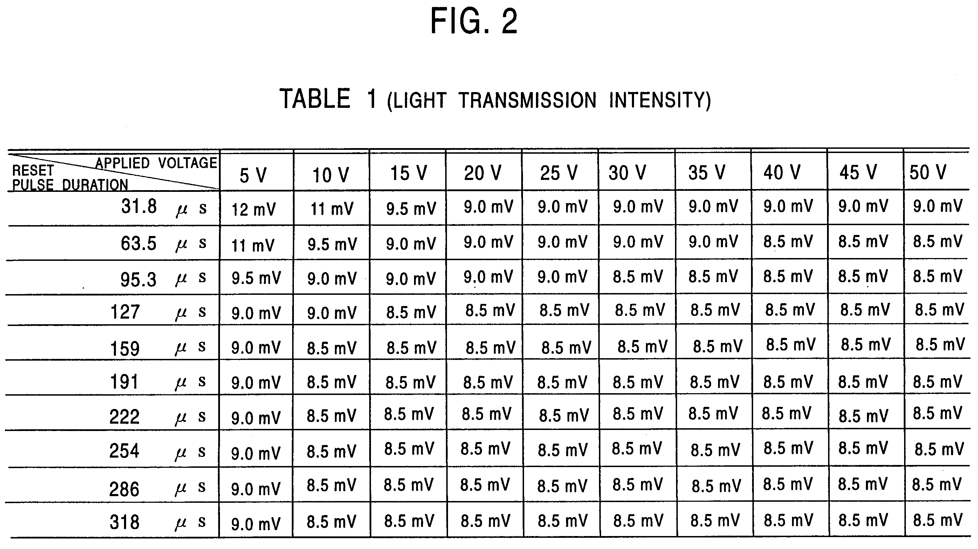

The relation between the reset pulse durations and the black level are shown in Fig. 2 (TABLE 1). It is understood that maintaining the pulse duration for a certain period, in particular, maintaining the pulse duration for more than 63.5 µs (if the pulse duration is 63.5 µs, a voltage to be applied can be set to not less than 40 V) causes the black level to be reduced to 8.5 mV, and there is shown uniform orientation in the layer of the ferroelectric liquid crystal. Electro-optical measurement was performed by setting the pulse duration to 127 µs, and the applied voltage to 25 V, and as a result, the hysteresis H∆V was 3 V. The black level can be sufficiently reduced and H∆V can be decreased, so that analog gradation can be preferably realized.

### COMPARATIVE EXAMPLE 1

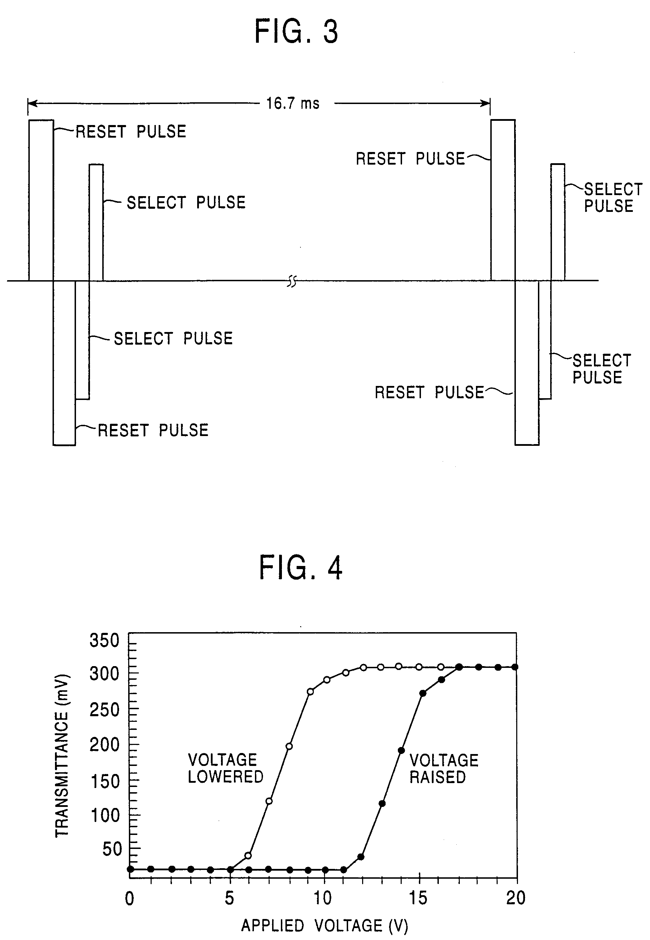

By using a driving waveform used in a device made by Phillips Corporation, as shown in Fig. 3, a liquid crystal device was driven, which was produced in the same manner as shown in example 1. From a graph showing the relation between the applied voltage and transmittance which were obtained, it is understood that the hysteresis width H∆V was extremely great, for example, as 6 V. In consideration of its ratio with ∆V (6 V) showing gradation, it is impossible to display gray scales.

### EXAMPLE 2 (SET OF RESET RELAXATION DURATION)

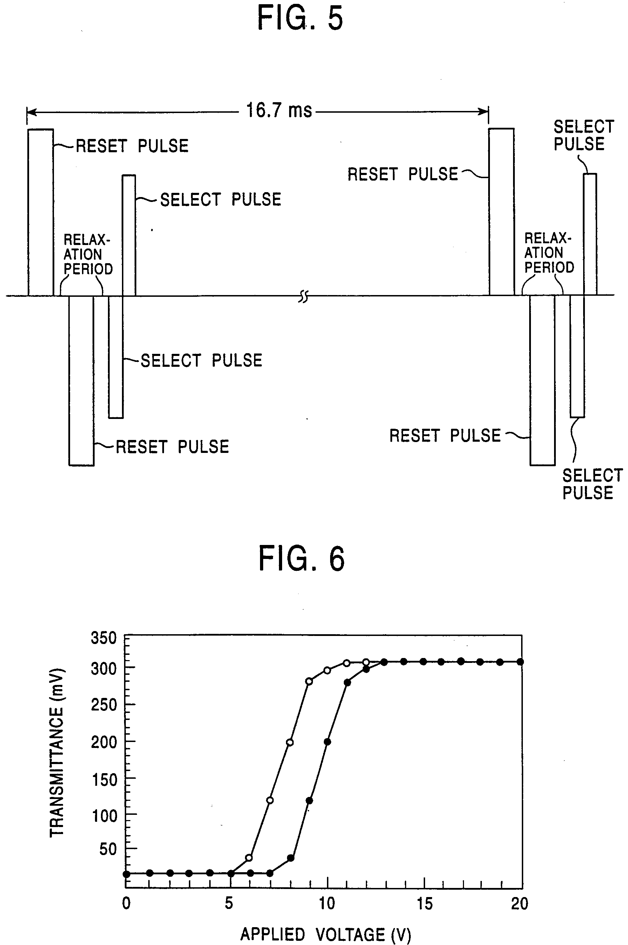

In accordance with the same manner as shown in example 1, a liquid crystal device was produced, and driven by using a driving waveform as shown in Fig. 5.

In connection with this liquid crystal device, the relationship between the applied voltage and transmittance was examined. When a waveform, as described below and shown in Fig. 5, was used to drive the liquid crystal device under crossed Nicols conditions, light transmission intensity was monitored after select pulses were applied.

Compared with the prior art, a feature of this waveform lies in the introduction of a duration between reset pulses and select pulses, this duration being introduced from the viewpoint of relaxing the connection of electronic polarization caused by spontaneous polarization of liquid crystal molecules and polarization of an orientation film. This enables resetting to be smoothly performed, and enables the reduction of an electric field intensity area. On the contrary, a waveform having no relaxation duration causes the intense anchoring of liquid crystal molecules close to the orientation films, and as result, an extra electric field intensity area is required for the inversion of liquid crystal.

A reset pulse is intended for uniformly returning once to the initial state the director of liquid crystal caused to change by previously written voltage, each time just before writing. A select pulse is for writing the gray level showing gradation. In this measurement, its voltage was raised or lowered by 1 V.

A graph showing the relation between the applied voltage and transmittance as shown in Fig. 6 was obtained. The graph shows different transmittance depending upon voltages, and a broad threshold width (6 V) for the switching between the bi-stable modes of ferroelectric liquid crystal. In consideration of a ratio with H∆V (2 V) showing hysteresis, the graph implies a possibility of gradation expression.

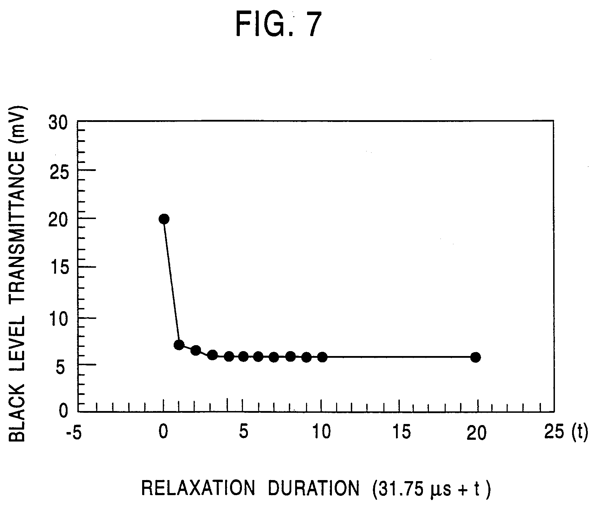

Further, the transmittance dependency at the black level caused by both relaxation duration and reset pulses was measured. The reset pulse was determined in accordance with the manner as shown in example 1, and by changing a period for applying a voltage of 0 V just before applying the reset pulse, the transmittance at the black level after the change was measured. The results are shown in Fig. 7. It is understood therefrom that the black level rapidly dropped when the relaxation duration was not less than 31.75 µs. This relaxation duration corresponds to a positive multiple of a reset pulse duration, precisely to a value of (63.5/2) µs multiplied by one or greater.

### EXAMPLE 3 (BLACK WRITING)

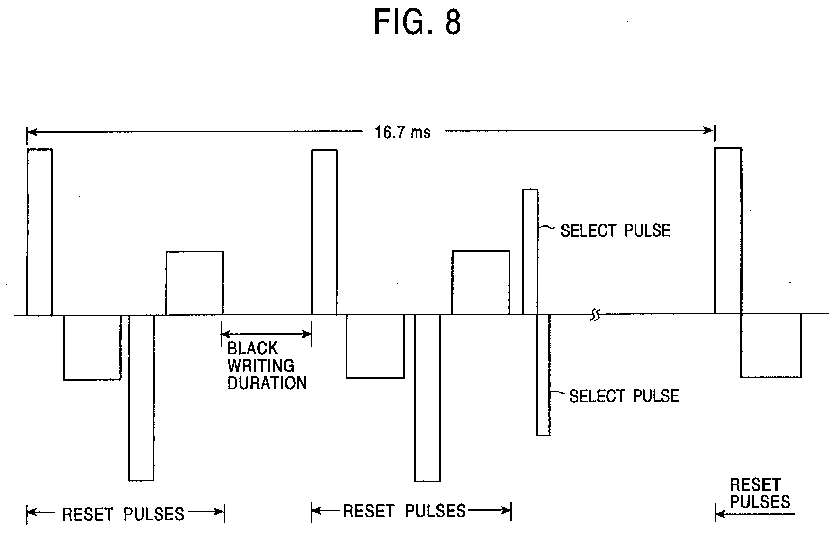

In accordance with the same manner as shown in example 1, a liquid crystal device was produced, and driven by using a driving waveform as shown in Fig. 8.

In connection with this liquid crystal device, the relation between the applied voltage and transmittance was examined. When a waveform, as described below and shown in Fig. 8, was used to drive the liquid crystal device under crossed Nicols conditions, light transmission intensity after select pulses were applied was monitored. A select pulse is for writing the gray level. In this measurement, its voltage was raised or lowered by 1 V.

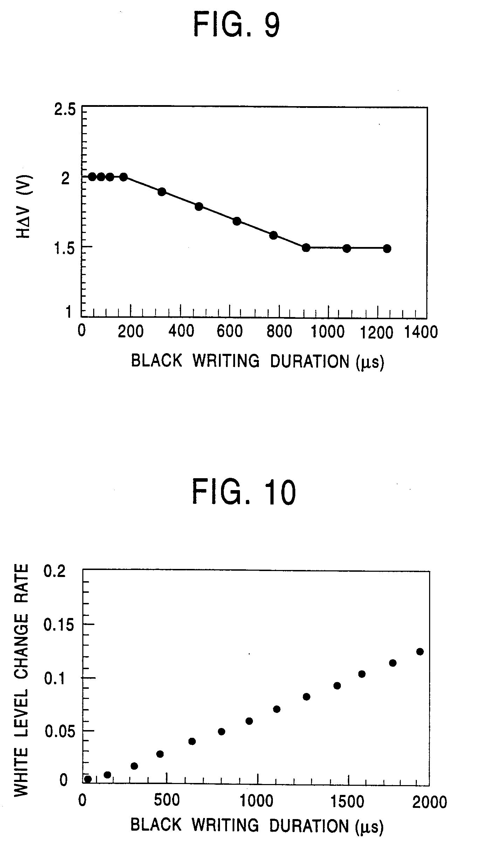

The relation between the writing duration and hysteresis is shown in Fig. 9. The writing duration is preferred to be 63.5 μs or longer. As the writing duration lengthens, the hysteresis (HΔV) was reduced to less than 2 V, and its effect becomes saturated at 1 ms. However, black writing causes the transmittance in which the white level is reduced. The relation is shown in Fig. 10. Since a black writing duration of 1.5 ms caused the white level to decrease by as much as 10%, the black writing duration should be not more than 1 ms for maintaining the white level.

Further, this black level is determined by data voltage, however it hardly needs saying that the voltage is less than the threshold voltage of liquid crystal molecules. On the other hand, the reset pulse itself should be similar in the case of example 1.

Compared with the prior art, a feature of this waveform (shown in Fig. 8) lies in the reduction of hysteresis by using a driving waveform so that a select pulse is applied after a black status is once created among reset pulses in each field.

COMPARATIVE EXAMPLE 2

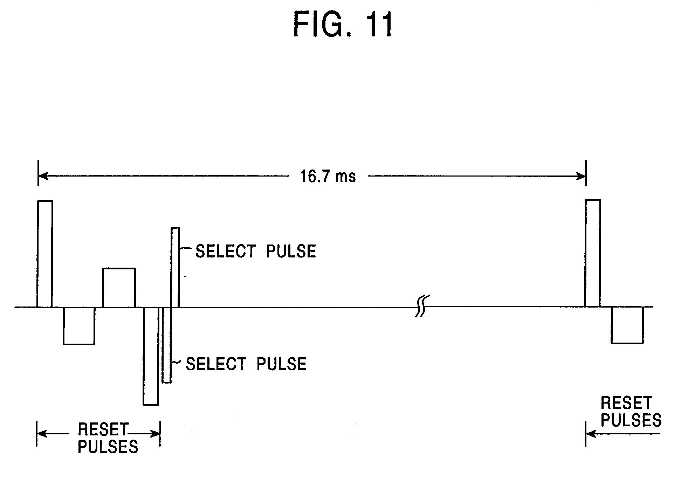

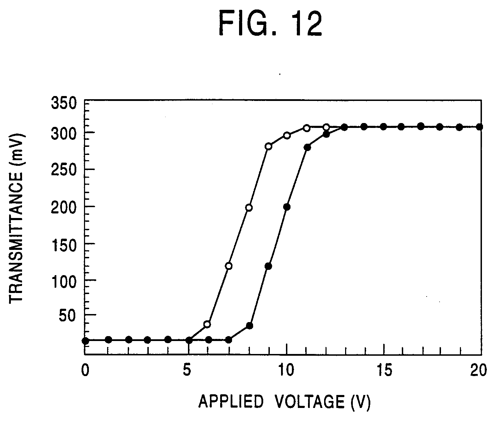

By using a driving waveform as shown in Fig. 11, a liquid crystal device was driven. The liquid crystal device was produced in accordance with the same manner as shown in example 1. According to a graph (Fig. 12) showing the relation between the applied voltage and transmittance which were measured, HΔV showing hysteresis was 2 V.

EXAMPLE 4 (ELECTRIC FIELD ORIENTATION PROCESS)

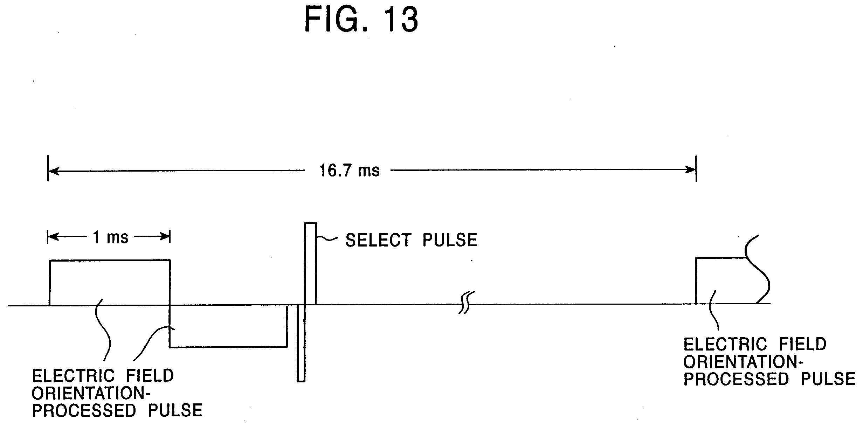

In accordance with the same manner as shown in example 1, a liquid crystal device was produced. By using a driving waveform as shown in Fig. 13, the liquid crystal device was driven.

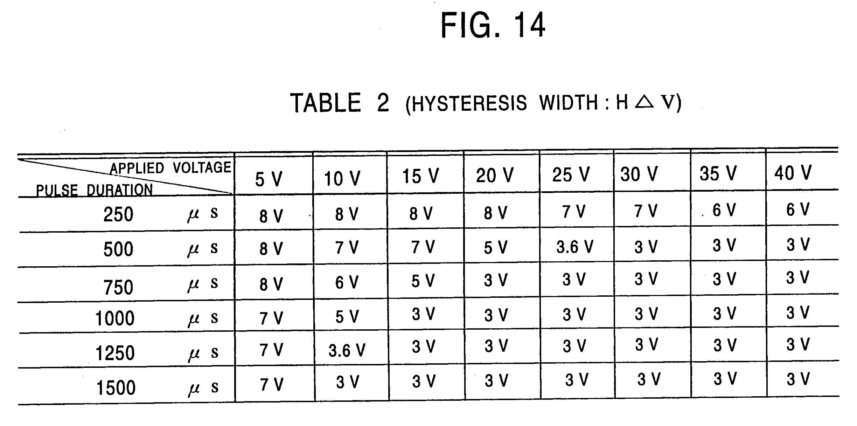

In connection with the liquid crystal device, the relation between the applied voltage and transmittance was examined. Under crossed Nicols conditions, by using a driving waveform, as described below and shown in Fig. 13, the liquid crystal device was driven, and after select pulses were applied, light transmission intensity was monitored. The results are shown in Fig. 14.

Compared with the prior art, a feature of this waveform lies in both the reduction of hysteresis by using a waveform such as to return the layer structure of liquid crystal molecules to the initial state, and a contribution to the stability of the layer structure.

The select pulse is for writing the gray level. In this measurement, its voltage was raised or lowered by 1 V.

According to the results shown in Fig. 14, different transmittance was determined depending upon voltage. The results show a possibility of gradation expression and the reduced hysteresis. In order to shorten the hysteresis width based on the voltage and duration of an electric field process waveform, "Pulse Voltage × Pulse Duration" may be not less than 15 V • ms, as understood from Fig. 14.

On the other hand, in a liquid crystal device employing a conventional driving method in which this electric field process waveform was not used in continuous driving, it was observed that after one week, the device became monostable (which means having no bi-stability but memory effects), and the orientation status changed. However, in the device employing a driving method in which this electric field process waveform was used, these changes were not observed. It is thus understood that this method contributed to the stability of the layer structure.

EXAMPLE 5 (APPLICATION OF SUPERIMPOSED PART-INCLUDED PULSES)

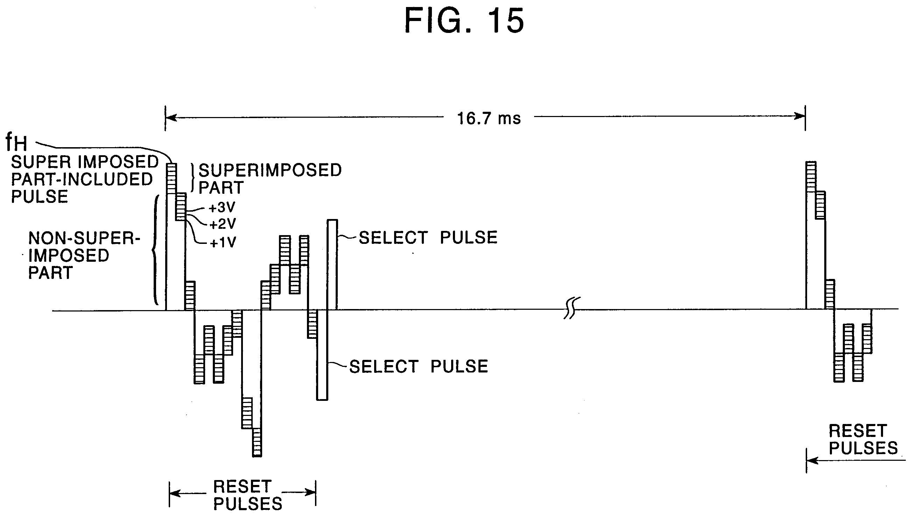

In accordance with the same manner as shown in example 1, a liquid crystal device was produced. By using a driving waveform as shown in Fig. 15, the liquid crystal device was driven.

In connection with this liquid crystal device, the transmittance at the black level was examined. Under crossed Nicols conditions, by using a driving waveform as described below and shown in Fig. 15, the liquid crystal device was driven, and the light transmission intensity at the black level was monitored. The voltage of a select pulse was fixed to 20 V.

Compared with the prior art, a feature of this waveform lies in the predetermined transformation of reset pulses by using superimposed part-included pulses in order to prevent each stable position from not being completely reset by change in electric field strength of the reset pulses due to data voltage.

In other words, in Fig. 15, in order to obtain effective reset pulses shown in white, parts having a sign as opposite as data voltage are superimposed to form pulses as transformed conventional reset pulses, whereby change in the electric field strength of the reset pulses, caused by the data pulse is reduced by half to enable resetting.

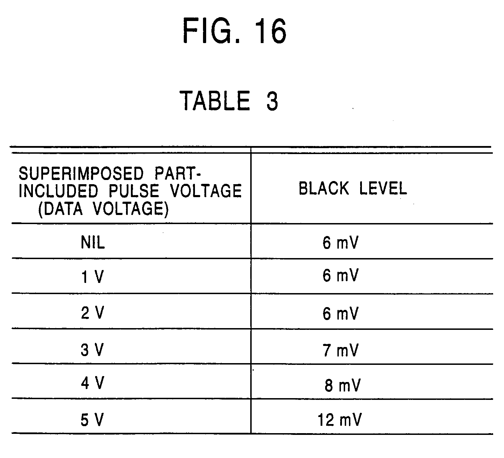

The relation between the superimposed part-included pulses $f_H$ and the black level is shown in Fig. 16 (Table 3). According to the Table 3, it is understood that the black level increased depending upon the voltage of the superimposed part-included pulse, and therefore resetting was not completely performed. From this knowledge, it is understood that a predeterminedly applying a half of the data voltage with an opposite sign enables substantially canceling the irregularity of liquid crystal molecules (e.g. flicker of black and white) caused by bias voltage (data voltage).

EXAMPLE 6 (APPLICATION OF AC PULSES)

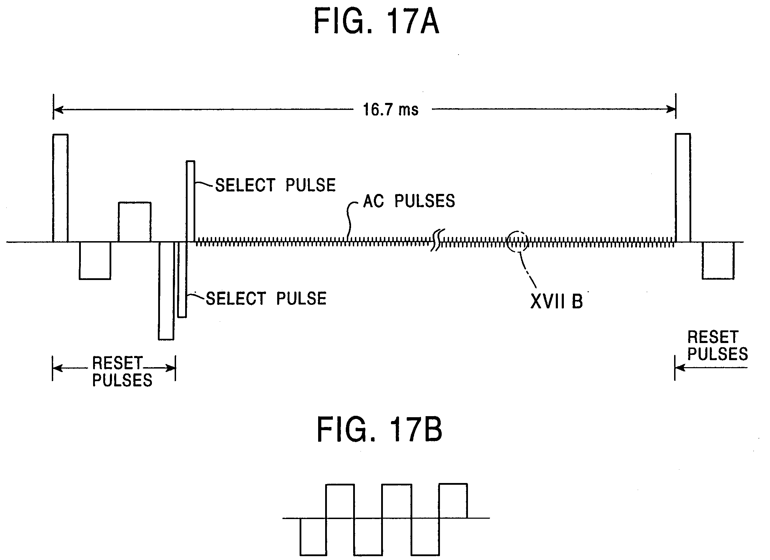

In accordance with the same manner as shown in example 1, a liquid crystal device was produced. By using a driving waveform as shown in Fig. 17A, the liquid crystal device was driven.

In connection with the liquid crystal device, the relation between the applied voltage and transmittance was examined. Under crossed Nicols conditions, by using a driving waveform, as described below and shown in Fig. 17A, the liquid crystal device was driven. After select pulses were applied, light transmission intensity was monitored.

Compared with the prior art, a feature of this waveform lies in enhancing the stability of memory effects by applying AC pulses whose frequency is not less than a frequency for ferroelectric liquid crystal molecules to have the negative anisotropy of dielectric constant, in other words, AC pulses of high-frequency (not less than a frequency than that of the select pulse) for acting on the anisotropy of dielectric constant of ferroelectric liquid crystal molecules, and in controlling the threshold width of gradation, hysteresis, and a threshold.

The select pulse is for writing the gray level. In this measurement, its voltage was raised or lowered by 1 V.

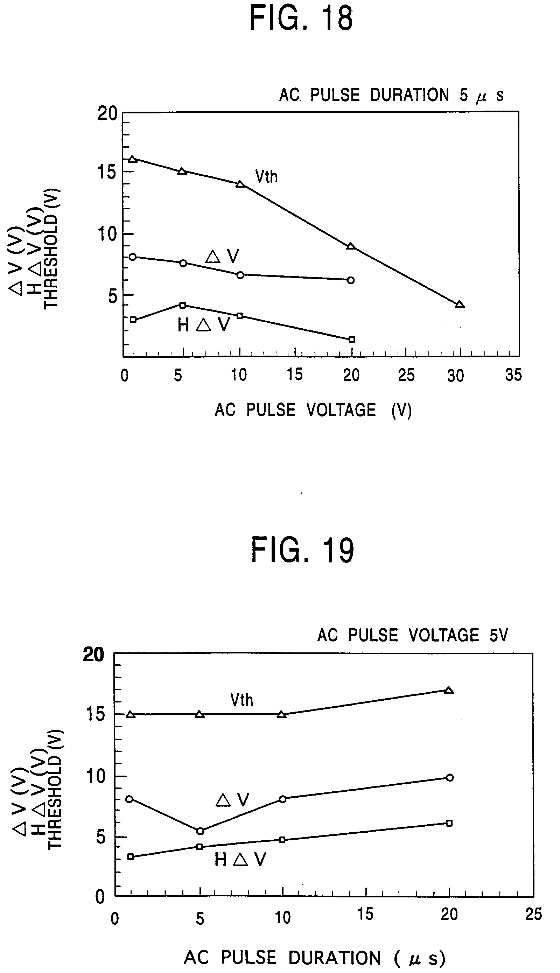

Depending upon voltage, different transmittance was determined to enable gradation expression. In Fig. 18, there are shown $\Delta V$, H$\Delta V$, and $V_{th}$ when the AC pulse duration was fixed to 5 $\mu$s and the voltage was changed. Fig. 18 shows that the liquid crystal device has preferred characteristics when the AC pulse voltage is not more than 30 V. In Fig. 19 there are shown $\Delta V$, H$\Delta V$, and $V_{th}$ when the applied voltage was fixed to 5 V and the pulse duration was changed. Fig. 19 shows that the liquid crystal device has preferred characteristics when the pulse duration is not more than (1/2) H.

From these results, it is understood that applying high-frequency AC pulses enable $\Delta V$, H$\Delta V$, and $V_{th}$ to be controlled. By using a large AC pulse voltage and a small AC pulse duration, it is possible to reduce H$\Delta V$. Further, in order to apply a plurality of AC pulses within a half of horizontal scanning period, the AC pulses should have a frequency not less than 30 kHz.

EXAMPLE 7 (APPLICATION OF ATTENUATION PULSES)

In accordance with the same manner as shown in example 1, a liquid crystal device was produced. By using a driving waveform including attenuation pulses, the liquid crystal device was driven. The attenuation pulses are formed by gradually decreasing the applied voltage within a period in which a time for resetting and selecting is deducted from 1 H, such as 5 V, -5 V, 4 V, -4 V, 3 V, -3 V, 2 V, -2 V, 1 V, and -1 V. The pulse duration is determined, based on the relation between the number of the attenuation pulses and the memory durations in one frame.

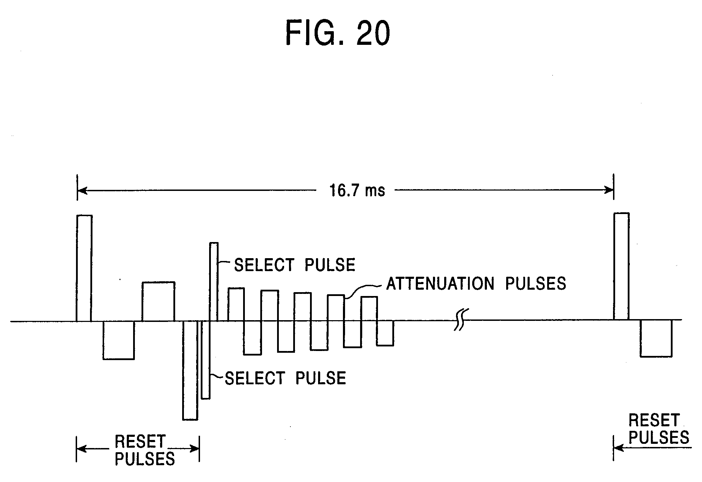

In connection with this liquid crystal device, the relation between the applied voltage and transmittance was examined. Under crossed Nicols conditions, by using a driving waveform, as described below and shown in Fig. 20, the liquid crystal device was driven. After select pulses were applied, light transmission intensity was monitored.

Compared with the prior art, a feature of this waveform lies in the introduction of pulses for neutralizing ions present in bulk in the interface between liquid crystal and orientation films. Such neutralization is performed by applying low-frequency attenuation pulses capable of effecting ions in a liquid crystal device in each frame.

The select pulse is for writing the gray level showing gradation. In this measurement, its voltage was raised or lowed by 1 V.

Depending upon voltage, different transmittance was determined to enable gradation expression. In Fig. 21 (Table 3), there is shown H$\Delta V$ when the Voltage-Transmittance curve was measured by changing the number of attenuation pulses. The results show that applying low-frequency attenuation pulses enables H$\Delta V$ to be almost completely canceled. The product of the maximum voltage of an attenuation pulse and its width may be not more than half of the product, Data Voltage $\times$ (63.5 / 2) $\mu$s.

The present invention has been described by referring to the examples, as shown in the foregoing description. The above-described examples may be further modified, based on the ideas of the present invention.

By way of example, the present invention has been achieved, without any change of materials and with more complete analog gradation realized by controlling factors such as selecting a driving waveform, or combining some driving waveforms. Such controlling the factors are as follows: (1) applying reset pulses and setting relaxation durations for returning liquid crystal molecules or a liquid crystal layer structure to the initial state; (2) introducing electric field orientation-processed pulses, black level writing, or superimposed part-included pulses $f_H$ for compensating the negative effects of data voltage; or (3) introducing high-frequency AC stabilized pulses or low-frequency attenuation pulses for enhancing memory effects and relaxing the polarization of liquid crystal molecules and the orientation film.

Further, it is possible to variously change the material, structure, and shape of each constituent part of a liquid crystal device, and a method of producing the device, further the properties, kinds, and so forth of ultrafine particles used in forming fine micro-domains, as well as the kind of liquid crystal. Also, a method of adding the super-particulates may be changed, and the distribution position thereof may be located not only in the liquid crystal but also on or in the orientation films.

In the above-described examples, there are described liquid crystal devices suitable for display devices. Such liquid crystal devices are, in particular, preferred in realizing gradation (half tones). However, the liquid crystal device according to the present invention may be applied to optical filters and shutters, the display of office automation equipment, screens, phase control devices for wobbling, and so forth. The above-described method of driving enables any of these to have performance over the known arts.

As described above, the liquid crystal device used in the present invention has a pair of substrates with liquid crystal provided therebetween, and in the liquid crystal, regions for switching the liquid crystal, having different threshold voltages are finely distributed. Due to such distribution, in one pixel, the emergence of fine regions (micro-domains) with different threshold voltages ($V_{th}$) causes the transmittance of the micro-domains to change with a relatively slow rate, in accordance with the applied voltage. In one domain, when liquid crystal molecules are bi-stable, the domain has memory effects, and a still image which is free from flicker is realized. Because one pixel is formed by domains of the $\mu$m-order having different threshold voltages, analog display of continuous gradation, with a high contrast is realized.

Further, the method of driving a liquid crystal device in accordance with the present invention realizes analog gradation display, maintaining a high contrast, by selecting a waveform from a plurality of driving waveforms or by using any combination of the waveforms. The analog gradation display is performed by applying reset pulses and setting relaxation duration for returning liquid crystal molecules or a liquid crystal layer structure to the initial state, the introduction of electric field orientation-processed pulses, black level writing, by introducing superimposed part-included pulses $f_H$ for compensating the negative effects of data voltage, and by introducing high-frequency AC pulses or low-frequency attenuation pulses for enhancing memory effects and relaxing the polarization of liquid crystal molecules and the orientation film.

## Claims

1. A method of driving a liquid crystal device in which liquid crystal is provided between a pair of substrates and regions of different threshold voltages for switching said liquid crystal are distributed,
   wherein reset pulses are applied to said liquid crystal device, said reset pulses having durations required for returning the molecules of said liquid crystal to the initial state.

2. A method of driving a liquid crystal device according to Claim 1, wherein said reset pulses are applied in each field.

3. A method of driving a liquid crystal device according to Claim 1, wherein said reset pulses have durations of not less than one horizontal scanning period (1 H).

4. A method of driving a liquid crystal device according to Claim 1, wherein said liquid crystal includes particles to enable analog gradation display within one pixel.

5. A method of driving a liquid crystal device according to Claim 1, wherein on said reset pulses, pulses for reducing a change in electric field strength caused by data pulses are superimposed.

6. A method of driving a liquid crystal device in which liquid crystal is provided between a pair of substrates and regions of different threshold voltages for switching said liquid crystal are distributed,
   wherein a relaxation duration required for returning the molecules of said liquid crystal to the initial state is provided between a reset pulse and a select pulse.

7. A method of driving a liquid crystal device, according to Claim 6, wherein said relaxation duration is provided in each field.

8. A method of driving a liquid crystal device, according to Claim 6, wherein said relaxation duration is a positive multiple of 1/2 horizontal scanning period (1/2 H).

9. A method of driving a liquid crystal device, according to Claim 6, wherein said liquid crystal includes particles to enable analog gradation display within one pixel.

10. A method of driving a liquid crystal device in which liquid crystal is provided between a pair of substrates and regions of different threshold voltages for switching said liquid crystal are distributed,
    wherein a duration for writing the black level is provided between a reset pulse and a select pulse.

11. A method of driving a liquid crystal device according to Claim 10, wherein said duration for writing the black level is provided in each field.

**12.** A method of driving a liquid crystal device, according to Claim 10, wherein said duration for writing the black level is not less than one horizontal scanning period (1 H) and not more than 1 ms.

**13.** A method of driving a liquid crystal device according to Claim 10, wherein said liquid crystal includes particles to enable analog gradation display within one pixel.

**14.** A method of driving a liquid crystal device in which liquid crystal is provided between a pair of substrates and regions of different threshold voltages for switching said liquid crystal are distributed,
wherein electric field orientation-processed pulses for returning the molecules of said liquid crystal to the initial state are applied before select pulses are applied.

**15.** A method of driving a liquid crystal device according to Claim 14, wherein said electric field orientation-processed pulses are applied in each field.

**16.** A method of driving a liquid crystal device according to Claim 14, wherein the product of the applied voltage and pulse duration of said electric field orientation-processed pulse is not less than 15 V • ms.

**17.** A method of driving a liquid crystal device according to Claim 14, wherein said liquid crystal includes particles to enable analog gradation display within one pixel.

**18.** A method of driving a liquid crystal device in which liquid crystal is provided between a pair of substrates and regions of different threshold voltages for switching said liquid crystal are distributed,
wherein AC pulses are applied, the frequency of which is not less than a frequency which causes molecules of said liquid crystal to have the negative anisotropy of dielectric constant.

**19.** A method of driving a liquid crystal device according to Claim 18, wherein said AC pulses are applied, out of the periods in which reset pulses and select pulses are given in the respective fields.

**20.** A method of driving a liquid crystal device according to Claim 18, wherein said AC pulses have a frequency of not less than 30 kHz, and each have a voltage of not more than 30 V and a duration of not more than 1/2 horizontal scanning period (1/2 • H).

**21.** A method of driving a liquid crystal device according to Claim 18, wherein said liquid crystal includes particles to enable analog gradation display within one pixel.

**22.** A method of driving a liquid crystal device in which liquid crystal is provided between a pair of substrates and regions of different threshold voltages for switching said liquid crystal are distributed,
wherein attenuation pulses having voltages of not more than threshold voltage are applied.

**23.** A method of driving a liquid crystal device according to Claim 22, wherein said attenuation pulses are applied, out of the periods in which reset pulses and select pulses are given in the respective fields.

**24.** A method of driving a liquid crystal device according to Claim 22, wherein said attenuation pulses are applied in order to neutralize ions present in the interface between orientation films provided on said substrates and said liquid crystal.

**25.** A method of driving a liquid crystal device according to Claim 22, wherein the product of the voltage and duration of the maximum pulse among said attenuation pulses is not more than a half of the product of data voltage and 1/2 horizontal scanning period (1/2 • H).

**26.** A method of driving a liquid crystal device according to Claim 22, wherein said liquid crystal includes particles to enable analog gradation display within one pixel.

# FIG. 1

RESET PULSE 1
(NEUTRALIZED PART
FOR RESET PULSE
TO BLACK LEVEL)

16.7 ms

RESET PULSE 4
(RESET FOR
WHITE LEVEL)

SELECT PULSE

RESET PULSE 2
(RESET FOR
BLACK LEVEL)

SELECT PULSE

RESET PULSE 3
(NEUTRALIZED PART
FOR RESET PULSE
TO WHITE LEVEL)

RESET
PULSES

RESET
PULSES

EP 0 762 377 A2

# FIG. 2

## TABLE 1 (LIGHT TRANSMISSION INTENSITY)

| RESET PULSE DURATION \ APPLIED VOLTAGE | 5 V | 10 V | 15 V | 20 V | 25 V | 30 V | 35 V | 40 V | 45 V | 50 V |
|---|---|---|---|---|---|---|---|---|---|---|
| 31.8 $\mu$ s | 12 mV | 11 mV | 9.5 mV | 9.0 mV | 9.0 mV | 9.0 mV | 9.0 mV | 9.0 mV | 9.0 mV | 9.0 mV |
| 63.5 $\mu$ s | 11 mV | 9.5 mV | 9.0 mV | 9.0 mV | 9.0 mV | 9.0 mV | 9.0 mV | 8.5 mV | 8.5 mV | 8.5 mV |
| 95.3 $\mu$ s | 9.5 mV | 9.0 mV | 9.0 mV | 9.0 mV | 9.0 mV | 8.5 mV | 8.5 mV | 8.5 mV | 8.5 mV | 8.5 mV |
| 127 $\mu$ s | 9.0 mV | 9.0 mV | 8.5 mV | 8.5 mV | 8.5 mV | 8.5 mV | 8.5 mV | 8.5 mV | 8.5 mV | 8.5 mV |
| 159 $\mu$ s | 9.0 mV | 8.5 mV | 8.5 mV | 8.5 mV | 8.5 mV | 8.5 mV | 8.5 mV | 8.5 mV | 8.5 mV | 8.5 mV |
| 191 $\mu$ s | 9.0 mV | 8.5 mV | 8.5 mV | 8.5 mV | 8.5 mV | 8.5 mV | 8.5 mV | 8.5 mV | 8.5 mV | 8.5 mV |
| 222 $\mu$ s | 9.0 mV | 8.5 mV | 8.5 mV | 8.5 mV | 8.5 mV | 8.5 mV | 8.5 mV | 8.5 mV | 8.5 mV | 8.5 mV |
| 254 $\mu$ s | 9.0 mV | 8.5 mV | 8.5 mV | 8.5 mV | 8.5 mV | 8.5 mV | 8.5 mV | 8.5 mV | 8.5 mV | 8.5 mV |
| 286 $\mu$ s | 9.0 mV | 8.5 mV | 8.5 mV | 8.5 mV | 8.5 mV | 8.5 mV | 8.5 mV | 8.5 mV | 8.5 mV | 8.5 mV |
| 318 $\mu$ s | 9.0 mV | 8.5 mV | 8.5 mV | 8.5 mV | 8.5 mV | 8.5 mV | 8.5 mV | 8.5 mV | 8.5 mV | 8.5 mV |

EP 0 762 377 A2

# FIG. 3

16.7 ms

RESET PULSE

RESET PULSE

SELECT PULSE

SELECT PULSE

SELECT PULSE

SELECT PULSE

RESET PULSE

RESET PULSE

RESET PULSE

# FIG. 4

TRANSMITTANCE (mV)

VOLTAGE LOWERED

VOLTAGE RAISED

APPLIED VOLTAGE (V)

# FIG. 5

# FIG. 6

# FIG. 7

BLACK LEVEL TRANSMITTANCE (mV)

RELAXATION DURATION (31.75 μs + t )

# FIG. 8

16.7 ms

SELECT PULSE

SELECT PULSE

BLACK
WRITING
DURATION

|←— RESET PULSES —→|  |←—RESET PULSES—→|

RESET
PULSES

EP 0 762 377 A2

# FIG. 9

# FIG. 10

# FIG. 11

16.7 ms

~SELECT PULSE

~SELECT PULSE

RESET
PULSES

RESET
PULSES

EP 0 762 377 A2

# FIG. 12

## FIG. 13

16.7 ms

SELECT PULSE

ELECTRIC FIELD ORIENTATION-PROCESSED PULSE

1 ms

ELECTRIC FIELD ORIENTATION-PROCESSED PULSE

# FIG. 14

TABLE 2 (HYSTERESIS WIDTH : H △ V)

| APPLIED VOLTAGE<br>PULSE DURATION | 5 V | 10 V | 15 V | 20 V | 25 V | 30 V | 35 V | 40 V |
|---|---|---|---|---|---|---|---|---|
| 250 $\mu$ s | 8 V | 8 V | 8 V | 8 V | 7 V | 7 V | . 6 V | 6 V |
| 500 $\mu$ s | 8 V | 7 V | 7 V | 5 V | 3.6 V | 3 V | 3 V | 3 V |
| 750 $\mu$ s | 8 V | 6 V | 5 V | 3 V | 3 V | 3 V | 3 V | 3 V |
| 1000 $\mu$ s | 7 V | 5 V | 3 V | 3 V | 3 V | 3 V | 3 V | 3 V |
| 1250 $\mu$ s | 7 V | 3.6 V | 3 V | 3 V | 3 V | 3 V | 3 V | 3 V |
| 1500 $\mu$ s | 7 V | 3 V | 3 V | 3 V | 3 V | 3 V | 3 V | 3 V |

EP 0 762 377 A2

# FIG. 15

EP 0 762 377 A2

# FIG. 16

## TABLE 3

| SUPERIMPOSED PART-INCLUDED PULSE VOLTAGE (DATA VOLTAGE) | BLACK LEVEL |
|---|---|
| NIL | 6 mV |
| 1 V | 6 mV |
| 2 V | 6 mV |
| 3 V | 7 mV |
| 4 V | 8 mV |
| 5 V | 12 mV |

# FIG. 17A

16.7 ms

SELECT PULSE

AC PULSES

SELECT PULSE

XVII B

RESET
PULSES

RESET
PULSES

# FIG. 17B

EP 0 762 377 A2

# FIG. 18

# FIG. 19

FIG. 20

# FIG. 21

# FIG. 22

FIG. 23

DATA VOLTAGE

SELECT VOLTAGE

1a  2a  2b  1b

FIG. 24

## FIG. 25

TRANSMITTANCE (%)

100

0

Vth

APPLIED VOLTAGE (V)

## FIG. 26

TRANSMITTANCE (%)

100
90

50

10
0

Vth1 → ← Vth2

APPLIED VOLTAGE (V)

# FIG. 27A

# FIG. 27B

# FIG. 28

$$\varepsilon\ 2 \qquad\qquad \varepsilon\ 1$$

$$d\ 2 \qquad\qquad d\ 1$$

PARTICLES     Eeff
10          LIQUID CRYSTAL 5

dgap

Vgap

$$\left( Egap = \frac{Vgap}{dgap} \right)$$

$$d1\ +\ \ d2\ =\ dgap$$

$$Eeff\ =\ \frac{\varepsilon\ 2}{\varepsilon\ 1d\ 2\ +\ \varepsilon\ 2d\ 1}\ \times\ Vgap \quad \text{- - - - - - - - - -} \quad (1)$$

$\varepsilon\ 1$ : DIELECTRIC CONSTANT

$\varepsilon\ 2$ : DIELECTRIC CONSTANT OF PARTICLES TO BE ADDED

# FIG. 29